# EUROPÄISCHE PATENTSCHRIFT

(11) **EP 2 765 470 B1**
(45) Veröffentlichungstag und Bekanntmachung des Hinweises auf die Patenterteilung: **21.09.2016**
(21) Anmeldenummer: 14154113.6
(22) Anmeldetag: 06.02.2014
(51) Int. Cl.: G05D 7/06

(54) **Volumenstromsmesskit**
Flow quantity measurement kit
Kit de mesure d'un débit de fluide

(30) Priorität: 12.02.2013 DE 102013101376
(43) Veröffentlichungstag der Anmeldung: 13.08.2014
(73) Patentinhaber: Viessmann Werke GmbH & Co. KG, 35108 Allendorf (DE)
(72) Erfinder: Manderbach, Magnus, 35683 Dillenburg (DE); Müller, Frank, Dr., 34537 Bad Wildungen (DE); Seumer, Birger, 35285 Gemünden (DE)
(74) Vertreter: Wolf, Michael

(56) Entgegenhaltungen:
- DE-A1-102006 009 047

## Beschreibung

Die Erfindung betrifft eine Messeinrichtung gemäß dem Oberbegriff des Patentanspruchs 1.

Eine Messeinrichtung der eingangs genannten Art ist allgemein bekannt (siehe beispielsweise http://de.wikipedia.org/w/in-dex.php?title=Ultraschall-Durchflussmesser&oldid=109747767). Darüber hinaus ist eine solche Messeinrichtung insbesondere aus der DE 10 2006 009 047 A1 bekannt. Diese besteht aus einem von einer Flüssigkeit durchströmten Messelement zur Bestimmung des Volumenstroms der Flüssigkeit, wobei das Messelement hydraulisch mit einem Zufuhranschluss und einem Abfuhranschluss für die Flüssigkeit verbunden ist und eine elektronische Schnittstelle zur Übertragung von ermittelten Messdaten aufweist, wobei das Messelement zwischen dem Zufuhr- und dem Abfuhranschluss hydraulisch mit einer von der Flüssigkeit durchströmten, elektrischen Pumpe verbunden ist. Der Begriff Volumenstrom ist dabei durch das Volumen der Flüssigkeit definiert, die sich innerhalb einer Zeiteinheit durch einen Querschnitt bewegt. Unter einer elektronischen Schnittstelle ist - und dies gilt auch für die noch zu erläuternde erfindungsgemäße Lösung - jede Art von Schnittstelle zu verstehen, mittels derer die Messdaten zum Beispiel an einen Comupter übertragbar sind, also zum Beispiel eine USB-Schnittstelle oder auch eine Bluetooth-Schnittstelle.

In diesem Zusammenhang wird auf die DE 10 2007 058 211 A1 verwiesen, in welcher in einem Leitungssystem parallel geschaltet zu jedem Wärmeübertrager permanent ein Volumenstromsensor vorgesehen ist.

Im weiteren sei auch auf die DE 10 2006 009 047 A1 hingewiesen, die auch ausschließlich einen permanenten Einbau eines Volumenstromsensors zeigt, wobei der Volumenstromsensor Daten an einen Rechenkreis liefert und dieser anschließend eine Pumpe reguliert.

Der Erfindung liegt die Aufgabe zugrunde, eine Messeinrichtung der eingangs genannten Art derart weiter zu bilden, dass mit dieser die Voraussetzungen für die Durchführung eines hydraulischen Abgleichs einer beliebigen, insbesondere ohne Volumenstromsensor ausgestatteten Heizungsanlage geschaffen sind bzw. werden.

Diese Aufgabe ist mit einer Messeinrichtung der eingangs genannten Art durch die im Kennzeichen des Patentanspruchs 1 aufgeführten Merkmale gelöst.

Nach der Erfindung ist also vorgesehen, dass zur variablen Anbindung des Zufuhr- und des Abfuhranschlusses an geometrisch unterschiedliche Anschlussgegebenheiten mindestens einer der beiden Anschlüsse am Ende eines flexiblen Rohrelements angeordnet ist, wobei das Messelement, der Zufuhranschluss, der Abfuhranschluss und die Pumpe als eine vor Ort einsetzbare Baugruppe ausgebildet sind.

Mit anderen Worten zeichnet sich die erfindungsgemäße Lösung dadurch aus, dass gewissermaßen ein vor Ort einsetzbares Mess-Kit bzw. eine vor Ort einsetzbare Baugruppe geschaffen wurde, das bzw. die letztlich aus dem mit einer Messdatenschnittstelle versehenen Messelement selbst, einer elektrischen Pumpe zum Fördern der Flüssigkeit, insbesondere des Heizkreiswassers, sowie aus einem Zufuhr- und einem Abfuhranschluss (für das Heizkreiswasser) besteht. Um dabei zu gewährleisten, dass das Kit auch bei geometrisch unterschiedlichen Anschlussgegebenheiten (bei unterschiedlichen Heizkesseln) einsetzbar ist, weist die Messeinrichtung für mindestens einen der beiden Anschlüsse ein flexibles Rohrelement auf.

Andere vorteilhafte Weiterbildungen der erfindungsgemäßen Messeinrichtung ergeben sich aus den abhängigen Patentansprüchen.

Die erfindungsgemäße Messeinrichtung einschließlich ihrer vorteilhaften weiterbildungen gemäß der abhängigen Patentansprüche wird nachfolgend anhand der zeichnerischen Darstellung eines bevorzugten Ausführungsbeispiels näher erläutert.

Es zeigt schematisch
- Figur 1: in Seitenansicht die erfindungsgemäße Messeinrichtung; und
- Figur 2: als Prinzipskizze die erfindungsgemäße Messeinrichtung im Zusammenspiel mit einer ein Heizgerät und einen Heizkreis umfassenden Heizungsanlage und einem Computer.

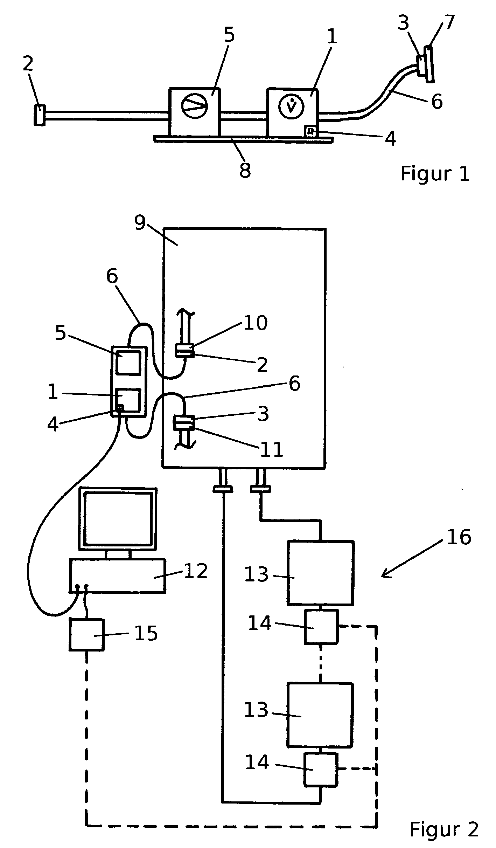

Die erfindungsgemäße Messeinrichtung ist in den Figuren 1 und 2 dargestellt. Wie insbesondere aus Figur 1 ersichtlich, besteht die Messeinrichtung aus einem von einer Flüssigkeit (hier Heizkreismedium, insbesondere Heizkreiswasser) durchströmten Messelement 1 zur Bestimmung des Volumenstroms der Flüssigkeit, wobei das Messelement 1, das insbesondere als Volumenstromsensor ausgebildet ist, hydraulisch mit einem Zufuhranschluss 2 und einem Abfuhranschluss 3 für die Flüssigkeit verbunden ist und eine elektronische Schnittstelle 4 (hier eine USB-Schnittstelle) zur Übertragung von ermittelten Messdaten aufweist, wobei das Messelement 1 zwischen dem Zufuhr- 2 und dem Abfuhranschluss 3 hydraulisch mit einer von der Flüssigkeit durchströmten, elektrischen Pumpe 5 verbunden ist.

Wesentlich für die erfindungsgemäße Messeinrichtung ist nun, dass zur variablen Anbindung des Zufuhr- 2 und des Abfuhranschlusses 3 an geometrisch unterschiedliche Anschlussgegebenheiten mindestens einer der beiden Anschlüsse 2, 3 am Ende eines flexiblen Rohrelements 6 angeordnet ist, wobei das Messelement 1, der Zufuhranschluss 2, der Abfuhranschluss 3 und die Pumpe 5 als eine vor Ort einsetzbare Baugruppe ausgebildet sind. Zwischen dem Messelement 1 und der Pumpe 5 ist dabei, wie dargestellt, eine weitere Verbindungsleitung angeordnet, d. h. der eine Anschluss 2 ist direkt mit der Pumpe 5 und der andere Anschluss 3 direkt mit dem Messelement 1 verbunden.

In Form einer derartigen Baugruppe ausgebildet, ist die erfindungsgemäße Messeinrichtung besonders bei der Durchführung eines so genannten hydraulischen Abgleichs einer Heizungsanlage hilfreich, was nachfolgend noch genauer erläuertert wird. Bezüglich des Themas "hydraulischer Abgleich" wird der Einfachheit halber auf Wikipedia verwiesen: http://de.wikipedia.org/ w/index.php?title=Hydraulischer-Abgleich&oldid=113033927.

Die erfindungsgemäße Messeinrichtung ist dabei insbesondere für solche Heizgeräte vorgesehen, die nicht vom Werk aus mit einem Volumenstromsensor ausgestattet sind, sprich lediglich über eine elektrische Pumpe verfügen. Diese Pumpe wird dann (nach einer ersten Alternative) bei der Durchführung des hydraulischen Abgleichs aus dem Heizgerät entfernt (siehe hierzu insbesondere Figur 2), so dass einerseits ein Pumpenzufuhranschluss 10 und andererseits ein Pumpenabfuhranschluss 11 verbleibt, zwischen denen ursprünglich die Originalpumpe des Heizgerätes angeordnet war. Nach einer anderen Alternative kann auch vorgesehen sein, dass die elektrisch Pumpe hydraulisch mit entsprechenden Ventilen ausgekoppelt und die erfindungsgemäße Messeinrichtung an geeigneten, typischerweise ebenfalls mit Ventilen verschließbaren Schnittstellen eingekoppelt wird.

Um die erfindungsgemäße Messeinrichtung besonders gut einsetzen zu können, ist bevorzugt vorgesehen, dass die beiden Anschlüsse 2, 3 als lösbare, insbesondere schraubbare, Anschlussschnittstellen ausgebildet sind. Außerdem ist das flexible Rohrelement 6, wie in den Figuren dargestellt, als Schlauch ausgebildet, wobei im Bedarfsfall (also je nach Größe der Pumpenzu- bzw. abfuhranschlüsse 10, 11) mindestens an einem der beiden Anschlüsse 2, 3 ein Anschlussadapterelement 7 zur Anpassung an unterschiedliche Gewindegrößen angeordnet ist.

Weiterhin ist bevorzugt vorgesehen, dass das Messelement 1 und die Pumpe 5 an einem gemeinsamen Trägerelement 8 befestigt angeordnet sind. Dabei ist die elektrische Pumpe 5, was nicht extra dargestellt, aber selbstverständlich ist, mit einem elektrischen Stromanschluss, insbesondere 230V-Anschluss, versehen.

Ebenfalls nicht dargestellt, aber bevorzugt vorgesehen ist, dass das Trägerelement 8 fest, aber werkzeugfrei lösbar an einem bzw. dem in Figur 2 dargestellten Heizgerät 9 angeordnet ist und dass das Trägerelement 8 Ü-förmig ausgebildet ist und zwischen seinen Schenkeln das Messelement 1 und die Pumpe 5 angeordnet sind.

Wiederum mit Verweis auf Figur 2 besteht eine besonders vorteilhafte Weiterbildung der erfindungsgemäßen Messeinrichtung - wie bereits oben erwähnt - darin, dass der Zufuhranschluss 2 mit einem bzw. dem Pumpenzufuhranschluss 10 und der Abfuhranschluss 3 mit einem bzw. dem Pumpenabfuhranschluss 11 eines bzw. des Heizgerätes 9 bei demontierter Heizgerätpumpe hydraulisch verbunden ausgebildet ist.

Weiterhin ist die elektronische Schnittstelle 4 der Messeinrichtung 1 mit einem Computer 12 verbunden ausgebildet, wobei außerdem der Computer 12 mit an Heizkörpern 13 eines Heizkreises 16 eines Heizgerätes 9 angeordneten, motorisch betriebenen Ventilstellantrieben 14 verbunden ausgebildet ist. Darüber hinaus ist auf dem Computer 12 eine (an sich bekannte und von der Anmelderin verwendete) Software zur Durchführung eines hydraulischen Abgleichs des Heizkreises 16 gespeichert. Ferner ist am Computer 12 ein mit den Ventilstellantrieben 14 datentechnisch (zum Beispiel per Funk) verbundener Sender 15 angeordnet.

Der hydraulische Abgleich einer Heizungsanlage mit einem Heizgerät ohne Volumenstromsensor wird mit Hilfe der erfindungsgemäßen Messeinrichtung wie folgt durchgeführt:
Im ersten Schritt werden die an den Heizkörpern vorhandenen, gewöhnlichen Thermostatventile durch die genannten, mit dem Computer 12 (typischerweise ein Laptop) datentechnisch verbundenen Ventilstellantriebe 14 ersetzt. Mit diesen kann der jeweilige Zufluss von Heizkreismedium zum Heizkörper über die genannte Software genau festgelegt werden, was während des hydraulischen Abgleichs erforderlich ist.

Im nächsten Schritt wird (im Sinne der oben beschriebenen ersten Alternative) die typischerweise im Heizgerät angeordnete Heizkreispumpe demontiert, wobei natürlich über entsprechende, nicht extra dargestellte Ventile sichergestellt worden ist, dass kein Heizkreiswasser am Pumpenzufuhranschluss 10 bzw. am Pumpenabfuhranschluss 11 ausläuft.

Als nächstes wird die erfindungsgemäße Messeinrichtung mit dem Heizgerät verbunden, und zwar in der oben bereits beschriebenen und in Figur 2 dargestellten Weise. So angeschlossen, ersetzt die elektrische Pumpe 5 der erfindungsgemäßen Messeinrichtung die ursprüngliche Heizkreispumpe, wobei darüber hinaus mit Hilfe des Messelements 1 der durch den Heizkreis fließende Volumenstrom des Heizkreismediums ermittelbar ist, und zwar über die Datenverbindung zwischen dem Messelement 1 und dem Computer 12.

Der eigentliche hydraulische Abgleich wird nun im Prinzip am Computer 12 durchgeführt, wobei die genannte Software einerseits Vorgaben zur Leistungseinstellung der elektrischen Pumpe 5 (auch "Messpumpe" genannt) macht, andererseits aber auch die Ventilstellantriebe 14 in geeigneter Weise betätigt. Am Ende des hydraulischen Abgleichs hat der Computer dann die spezifischen hydraulischen Eigenschaften des Heizkreises ermittelt. Im Ergebnis werden dem Benutzer Werte ausgegeben, die dazu dienen, den Zufluss zu den Heizkörpern orientiert am tatsächlichen Widerstand des Heizkreises und des jeweiligen Wärmebedarfs einzustellen, so dass alle Heizkörper optimal mit Heizkreismedium versorgt werden.

Am Ende des hydraulischen Abgleichs wird schließlich (jedenfalls bei der erwähnten ersten Alternative) die erfindungsgemäße Messeinrichtung wieder demontiert und die ursprüngliche Pumpe in den Heizkreis des Heizgerätes eingebaut.

wie oben bereits erwähnt, dient die erfindungsgemäße Messeinrichtung somit insbesondere bei älteren Heizkesseln bzw. Heizgeräten, die nicht mit einem Volumenstromsensor ausgerüstet sind, dazu, auf möglichst einfache Weise einen hydraulischen Abgleich durchführen zu können. Der Heizungsinstallateur muss hierzu lediglich einen Computer, die computergesteuerten Verstellantriebe, die bevorzugt in einem Servicekoffer untergebracht sind, und die erfindungsgemäße Messeinrichtung (auch "Erweiterungs-Kit" genannt) mit zur abzugleichenden Heizungsanlage bringen.

### Bezugszeichenliste

- 1: Messelement
- 2: Zufuhranschluss
- 3: Abfuhranschluss
- 4: elektronische Schnittstelle
- 5: elektrische Pumpe
- 6: flexibles Rohrelement
- 7: Anschlussadapterelement
- 8: Trägerelement
- 9: Heizgerät
- 10: Pumpenzufuhranschluss
- 11: Pumpenabfuhranschluss
- 12: Computer
- 13: Heizkörper
- 14: Ventilstellantrieb
- 15: Sender
- 16: Heizkreis

## Patentansprüche

1. Messeinrichtung, umfassend ein von einer Flüssigkeit durchströmtes Messelement (1) zur Bestimmung des Volumenstroms der Flüssigkeit, wobei das Messelement (1) hydraulisch mit einem Zufuhranschluss (2) und einem Abfuhranschluss (3) für die Flüssigkeit verbunden ist und eine elektronische Schnittstelle (4) zur Übertragung von ermittelten Messdaten aufweist, wobei das Messelement (1) zwischen dem Zufuhr- (2) und dem Abfuhranschluss (3) hydraulisch mit einer von der Flüssigkeit durchströmten, elektrischen Pumpe (5) verbunden ist,
**dadurch gekennzeichnet,**
**dass** zur variablen Anbindung des Zufuhr- (2) und des Abfuhranschlusses (3) an geometrisch unterschiedliche Anschlussgegebenheiten mindestens einer der beiden Anschlüsse (2, 3) am Ende eines flexiblen Rohrelements (6) angeordnet ist, wobei das Messelement (1), der Zufuhranschluss (2), der Abfuhranschluss (3) und die Pumpe (5) als eine vor Ort einsetzbare Baugruppe ausgebildet sind.

2. Messeinrichtung nach Anspruch 1,
**dadurch gekennzeichnet,**
**dass** die beiden Anschlüsse (2, 3) als lösbare, insbesondere schraubbare, Anschlussschnittstellen ausgebildet sind.

3. Messeinrichtung nach Anspruch 1 oder 2,
**dadurch gekennzeichnet,**
**dass** das flexible Rohrelement (6) als Schlauch ausgebildet ist.

4. Messeinrichtung nach einem der Ansprüche 1 bis 3,
**dadurch gekennzeichnet,**
**dass** mindestens an einem der beiden Anschlüsse (2, 3) ein Anschlussadapterelement (7) angeordnet ist.

5. Messeinrichtung nach einem der Ansprüche 1 bis 4,
**dadurch gekennzeichnet,**
**dass** das Messelement (1) und die Pumpe (5) an einem gemeinsamen Trägerelement (8) befestigt angeordnet sind.

6. Messeinrichtung nach Anspruch 5,
**dadurch gekennzeichnet,**
**dass** das Trägerelement (8) fest, aber werkzeugfrei lösbar an einem Heizgerät (9) angeordnet ist.

7. Messeinrichtung nach einem der Ansprüche 1 bis 6,
**dadurch gekennzeichnet,**
**dass** der Zufuhranschluss (2) mit einem Pumpenzufuhranschluss (10) und der Abfuhranschluss (3) mit einem Pumpenabfuhranschluss (11) eines Heizgerätes (9) bei demontierter Heizgerätpumpe hydraulisch verbunden ist.

8. Messeinrichtung nach einem der Ansprüche 1 bis 7,
**dadurch gekennzeichnet,**
**dass** die elektronische Schnittstelle (4) zur Verbindung mit einem Computer (12) ausgebildet ist.

9. Messeinrichtung nach Anspruch 8
**dadurch gekennzeichnet,**
**dass** der Computer (12) mit an Heizkörpern (13) eines Heizkreises (16) eines Heizgerätes (9) angeordneten, motorisch betriebenen Ventilstellantrieben (14) verbunden ist.

10. Messeinrichtung nach Anspruch 8 oder 9,
**dadurch gekennzeichnet,**
**dass** auf dem Computer (12) eine Software zur Durchführung eines hydraulischen Abgleichs des Heizkreises (16) gespeichert ist.

## Claims

1. Measurement device comprising a measuring element (1) through which a liquid flows for determining the volumetric flow rate of the liquid, wherein the measuring element (1) is connected hydraulically to a supply port (2) and a discharge port (3) for the liquid and has an electronic interface (4) for the transmission of determined measurement data, wherein the measuring element (1) between the supply (2) and the discharge port (3) is connected hydraulically to an electric pump (5) through which liquid flows,
**characterized in**
**that** for variable connection of the supply (2) and the discharge port (3) to geometrically different port conditions, at least one of the two ports (2, 3) is located at the end of a flexible pipe element (6), wherein the measuring element (1), the supply port (2), the discharge port (3) and the pump (5) are configured as an assembly that can be used on site.

2. The measurement device according to claim 1,
**characterized in**
**that** the two ports (2, 3) are configured as detachable, in particular screwable port interfaces.

3. The measurement device according to claim 1 or 2,
**characterized in**
**that** the flexible pipe element (6) is configured as a hose.

4. The measurement device according to any one of claims 1 to 3,
**characterized in**
**that** a port adapter element (7) is disposed on at least one of the two ports (2, 3).

5. The measurement device according to any one of claims 1 to 4,
**characterized in**
**that** the measuring element (1) and the pump (5) are disposed fastened on a common carrier element (8).

6. The measurement device according to claim 5,
**characterized in**
**that** the carrier element (8) is disposed firmly but detachably without tools on a heating device (9).

7. The measurement device according to any one of claims 1 to 6,
**characterized in**
**that** the the supply port (2) is hydraulically connected to a pump supply port (10) and the discharge port (3) is hydraulically connected to a pump discharge port (11) of a heating device (9) when the heating device pump is dismounted.

8. The measurement device according to any one of claims 1 to 7,
**characterized in**
**that** the electronic interface (4) is configured for connection to a computer (12).

9. The measurement device according to claim 8,
**characterized in**
**that** the computer (12) is connected to motor-operated valve adjusting drives (14) disposed on heating bodies (13) of a heating circuit (16) of a heating device (9).

10. The measurement device according to claim 8 or 9,
**characterized in**
**that** a software for implementing a hydraulic adjustment of the heating circuit (16) is stored on the computer (12).

## Revendications

1. Dispositif de mesure, comprenant un élément de mesure (1) traversé par un liquide pour déterminer le débit volumique du liquide, dans lequel l'élément de mesure (1) est relié hydrauliquement à un raccord d'alimentation (2) et un raccord d'évacuation (3) pour le liquide et présente une interface électronique (4) pour la transmission des données de mesure déterminées, dans lequel l'élément de mesure (1) est relié hydrauliquement entre le raccord d'alimentation (2) et le raccord d'évacuation (3) avec une pompe électrique (5) traversée par le liquide,
**caractérisé en ce que**
pour relier de manière variable le raccord d'alimentation (2) et le raccord d'évacuation (3) à des occasions de raccordement géométrique différentes, au moins un des deux raccords (2, 3) est disposé à l'extrémité d'un élément tubulaire flexible (6), dans lequel l'élément de mesure (1), le raccord d'alimentation (2), le raccord d'évacuation (3) et la pompe (5) sont conçus comme un module utilisable sur place.

2. Dispositif de mesure selon la revendication 1,
**caractérisé en ce que**
les deux raccords (2, 3) sont conçus comme des interfaces de raccordement amovibles, notamment vissables.

3. Dispositif de mesure selon la revendication 1 ou 2,
**caractérisé en ce que**
l'élément tubulaire flexible (6) est conçu comme un tuyau flexible.

4. Dispositif de mesure selon une des revendications 1 à 3,
**caractérisé en ce que**
un élément d'adaptateur de raccordement (7) est disposé sur au moins un des deux raccordements (2, 3).

5. Dispositif de mesure selon une des revendications 1 à 4,
**caractérisé en ce que**
l'élément de mesure (1) et la pompe (5) sont disposés en étant fixés sur un élément porteur commun (8).

6. Dispositif de mesure selon la revendication 5,
**caractérisé en ce que**
l'élément porteur (8) est disposé solidement, mais de manière amovible sans outil sur un appareil de chauffage (9).

7. Dispositif de mesure selon une des revendications 1 à 6,
**caractérisé en ce que**
le raccord d'alimentation (2) est relié hydrauliquement avec un raccord d'alimentation de pompe (10) et le raccord d'évacuation (3) est relié hydrauliquement avec un raccord d'évacuation de pompe (11) d'un appareil de chauffage (9) lorsque que la pompe d'appareil de chauffage est démontée.

8. Dispositif de mesure selon une des revendications 1 à 7,
**caractérisé en ce que**
l'interface électronique (4) est conçue pour être reliée avec un ordinateur (12).

9. Dispositif de mesure selon la revendication 8,
**caractérisé en ce que**
l'ordinateur (12) est relié avec un servomoteur de vanne (14) actionné de manière motorisée, disposé sur les corps chauffants (13) d'un circuit de chauffage (16) d'un appareil de chauffage (9).

10. Dispositif de mesure selon la revendication 8 ou 9,
**caractérisé en ce que**
sur l'ordinateur (12) est mémorisé un logiciel pour mettre en oeuvre un équilibrage hydraulique du circuit de chauffage (16).
